# EUROPÄISCHE PATENTSCHRIFT

(11) **EP 0 715 947 B1**
(45) Veröffentlichungstag und Bekanntmachung des Hinweises auf die Patenterteilung: **23.05.2001**
(21) Anmeldenummer: 95118997.6
(22) Anmeldetag: 02.12.1995
(51) Int. Cl.: B29D 30/12, B29C 33/76, B29C 43/10, B29C 35/02, B29C 53/82

(54) **Kern zum Aufbau eines Fahrzeugluftreifens**
Tyre building core
Noyau pour la confection de pneumatiques

(30) Priorität: 05.12.1994 DE 4443049
(43) Veröffentlichungstag der Anmeldung: 12.06.1996
(73) Patentinhaber: Continental Aktiengesellschaft, 30165 Hannover (DE)
(72) Erfinder: Sergel, Horst, D-30657 Hannover (DE); Gaida, Markus, D-30171 Hannover (DE); Hesse, Heiko, D-30900 Wedemark (DE); Blickwedel, Holger, Dr., D-30175 Hannover (DE)

(56) Entgegenhaltungen:
- EP-A- 0 008 012
- EP-A- 0 096 648
- DE-A- 1 604 528
- DE-A- 1 934 465
- DE-C- 598 839
- FR-A- 1 456 231
- FR-A- 2 720 326
- GB-A- 1 035 832
- US-A- 1 687 945
- PATENT ABSTRACTS OF JAPAN vol. 005, no. 143 (M-087), 9.September 1981 & JP-A-56 075846 (KOBE STEEL LTD), 23.Juni 1981,

## Beschreibung

Die Erfindung betrifft einen Kern zum Aufbau eines Fahrzeugluftreifens mit Seitenwänden und Lauffläche. Es ist bekannt, die Karkasse eines Fahrzeugluftreifens durch Rundumwickeln eines ringförmigen Kerns und anschließendes Auftrennen der radial unterhalb des Kerns gebildeten Karkassenschicht durch Schnitt in Umfangsrichtung über den gesamten Umfang hinweg zu erzeugen und anschließend die durch die Trennung entstandenen Ränder zur Erzeugung eines Reifenwulstes um aufgelegte Reifenkerne umzuklappen. Derartige Reifen sind beispielsweise aus der DE-OS 1934018 bekannt. Üblicherweise werden derartige Kerne nach Reifenaufbau, beispielsweise durch Einklappen (DE-OS 1934018) oder durch Entfernen der einzelnen Segmente eines in Umfangssegmente aufgeteilten ringförmigen Kerns EP 0481805 A2 nacheinander vom Reifen entfernt. Nach ihrer Fertigstellung, die in manchen Fällen durch zusätzliche Aufbauschritte außerhalb des Kerns erfolgt, werden die Reifen zwischengelagert und nach vorbestimmter Lagerzeit in die Vulkanisationspresse unzentriert eingelegt. In der Vulkanisationspresse wird von radial innen der Heizbalg der Vulkanisationspresse mit Heißdampf gefüllt und bewirkt die gewünschte Erhebung zum sicheren Eindrücken der Reifenaußenkontur in die profilierte Innenkontur der Mulde. Diese herkömmliche Fertigung fordert eine Reihe von Einzelschritten durch komplettes Entfernen des Reifens von der Form, anschließendes Zwischenlagern ohne Form, einen Kern und einen zusätzlichen Heizbalg in der Vulkanisationspresse, auf den der Reifen eigenständig mehr oder weniger genau aufgelegt wird ohne jedoch gesichert zentriert zu werden. Die dem Zufall überlassene Einlegegenauigkeit in der Heizpresse bringt Probleme hinsichtlich der Rundlaufgenauigkeiten (Uniformity) beim erzeugten Reifen mit sich. Nur mit zusätzlichem Aufwand und entsprechender Erfahrung des Bedienpersonals können die dadurch bedingten Gefahren zumindest teilweise reduziert werden.

In der EP 0481805 wird die Möglichkeit angedeutet, den Reifen erst nach erfolgter Vulkanisation vom starren, segmentierten Kern zu entfernen. Bei einem solchen starren Kern scheint jedoch die in herkömmlichen Vulkanisationspressen durch den Heizbalg von radial innen erzeugte Erhebung, die den Reifenrohling zuverlässig in die Innenkontur der den Reifen umgebenden Form drückt, nicht ohne weiteres möglich zu sein. Eine zuverlässige Ausformung der Profilierung, insbesondere im Laufflächenprofil, scheint somit mit einem derart steifen Kern nicht ohne zusätzliche Maßnahmen gewährleistet zu sein. Außerdem ist die zuverlässige Beheizung, die in üblichen Vulkanisationspressen über den Heizbalg von radial innen durch den Heißdampf erzeugt wird, ebenfalls nicht gewährleistet. Die vielen Umfangssegmente bringen eine Reihe von Spalten zwischen den einzelnen Segmenten mit sich, wodurch die Entstehung in Umfangsrichtung verteilter Grate von Gummimaterial, das sich in die Spalten schiebt; begünstigt wird. Da solche in Umfangsrichtung punktuell verteilt auftreten und diese Grate nicht unbedingt gleichmäßig ausgebildet sind, können auch hierdurch zusätzliche Uniformityprobleme entstehen.

Außerdem ist es bekannt, Reifen mit schlauchförmigen Innenschichten herzustellen, bei denen die schlauchförmige Innenschicht auf einen festen Kern durch Aufwickeln erzeugt wird, und die äußeren Schichten im Anschluß daran aufgelegt werden. Durch kleine Öffnungen fließt der beim Vulkanisationsprozeß verflüssigte, bzw. verdampfte Kern ab. Bei den eher ungenau und unvollständig ablaufenden Schmelz- und Verdampfungsprozessen ist auch hier eine sichere zuverlässige, gleichmäßige vorherbestimmbare Erhebung, wie eine bei üblichen Heizbälgen erzielt wird, nicht gewährleistet. Ebenso ist eine gleichmäßige Erhitzung von innen, wie sie bei üblichen Heizbälgen einer Vulkanisationspresse ermöglicht wird, nicht gewährleistet. Derartige wulst- und kernlose Reifen erfordern zudem Spezialfelgen für die Montage. Die vollständige Entfernung des Füllstoffes aus dem Inneren des Schlauchs kann nur mit erheblichem Aufwand, wenn überhaupt, gewährleistet werden.

Aus der DE-OS 1 934 465 ist es bekannt, einen Luftreifen auf einem Dorn aus thermoplastischem Kunststoff aufzubauen und zu vulkanisieren. Hierzu wird der thermoplastische Dorn zum Aufbau zwischen zwei Scheiben in einer Reifenaufbaumaschine verklemmt. Nach Aufbau werden die Scheiben entfernt und der Dorn zusammen mit dem Rohling von der Aufbaumaschine abgezogen. Der thermoplastische Dorn wird zusammen mit dem Reifenrohling anschließend in einer Vulkanisierform eingelegt.

Der Erfindung liegt demnach die Aufgabe zugrunde, einen Kern zum Aufbau eines Fahrzeugluftreifens zum Einsatz auf herkömmlichen Felgen durch Wickeltechnik zu schaffen, mit dem Aufbau und Vulkanisieren des Reifens mit einfachen Mitteln verbessert wird.

Die Aufgabe wird erfindungsgemäß durch einen Kern gemäß den Merkmalen von Anspruch 1 gelöst. Die Herstellungsvereinfachungen und Kostenvorteile der Wickeltechnik zur Herstellung eines herkömmlichen radial zur Felge hin offenen schlauchlosen Reifens, der mit seinen Wulstkernen auf herkömmlichen Felgen montiert werden kann, wird durch die Ausbildung des Kerns als Heizbalg für die Vulkanisation wesentlich vereinfacht. Nach Aufbau des Reifens kann ein derartiger Reifen in dem auf dem Kern aufgebauten Zustand zusammen mit dem Kern in die Vulkanisationspresse eingelegt werden. In herkömmlicher Weise wird der Heizbalg in der Vulkanisationspresse mit Heizdampf entsprechend den bereits aus üblichen Vulkanisieranlagen bekannten gesteuerten Abläufen gefüllt. Der Kern dehnt sich aufgrund des Heißdampfes aus und sorgt für die erforderliche Erhebung des Reifens, so daß der Rohling zuverlässig in die Innenprofilierung der den Reifen umgebenden Außenform gepreßt wird. Das gewünschte Profil des Reifens bildet sich sicher und ohne Qualitätsverlust gegenüber herkömmlichen Vulkanisiereinrichtungen. Auch der Temperaturverlauf im Innern des Reifens kann aufgrund der bekannten Steuerabläufe gewährleistet werden. Zusätzliche Verkantungen, Verformungen, die Uniformityprobleme, die durch Verkanten, Verformen oder durch Beschädigungen während des Abbaus des Rohlings vom Kern oder beim Einlegen des von innen nicht gestützten Rohlings in eine Vulkanisationspresse bei herkömmlichen Reifenherstellung zu Uniformityproblemen führen können, entfallen weitgehend. Der Arbeitsaufwand für die Entfernung vom Kern nach dem Aufbau, anschließendes Einlegen in die Vulkanisierpresse und späteres Entfernen aus Vulkanisierpresse und vom Heizbalg, wie er bei herkömmlichen Reifenherstellungsverfahren üblich ist, wird auf das Einlegen in die Vulkanisierpresse und das Entfernen vom Heizbalg und aus der Vulkanisierpresse reduziert.

Besonders vorteilhaft ist die Ausbildung eines erfindungsgemäßen Kerns gemäß den Merkmalen von Anspruch 2. Die thermoplastische Schale ermöglicht einen starren, festen Kern, der einen sehr genauen Aufbau der Karkasse begünstigt. Der Reifen kann exakt auf die Außenkontur der Schale aufgebaut werden, die der gewünschten Innenkontur des Reifens entspricht. Uniformityprobleme aufgrund von möglichen Verformungen des Wickelkerns beim Aufbau werden somit minimiert. In der Vulkanisationspresse wird die Schale aufgrund der sich erhöhenden Temperatur plastifiziert, so daß sie noch vor Erreichen der Vulkanisiertemperatur aufgrund des von innen mit Innendruck wirkenden Hitze expandiert und die gewünschte Erhebung des Reifens zur optimalen Profilierung erfolgt.

Bevorzugt wird der Kern auf einem Zentrierelement befestigt ausgebildet. Mit Hilfe des Zentrierelements wird ein zentrierter Kernaufbau gewährleistet und ohne großen Aufwand kann das Zentrierelement in der Vulkanisiereinrichtung befestigt werden, wodurch auch eine Zentrierung des Kerns und somit des Reifens in der Vulkanisiereinrichtung gewährleistet ist. Ohne den zusätzlichen Aufwand zum mehr oder weniger ungenauen Einstellen, wie beim herkömmlichen Einlegen üblich, ist der Reifen genau in der aufgebauten zentrierten Position zentriert vulkanisierbar. Hierdurch werden die Uniformityprobleme zusätzlich reduziert.

Bevorzugt werden eine thermoplastische Schale aus zwei konzentrischen, sich über den Umfang erstreckenden Halbschalen aufgebaut. Diese sind einfach, beispielsweise durch Formpressen oder durch Spritzguß herstellbar, und erzeugen maximal einen in Umfangsrichtung verlaufenden Spalt im zusammengefügten Zustand. Die Uniformityprobleme aufgrund der Gratbildung werden hierdurch reduziert.

Bevorzugt wird der Wickelkern aus thermoplastischem, polymerem Werkstoff, dessen Glasübergangstemperatur oberhalb RT (Raumtemperatur) liegt, und der bis 200°C thermisch stabil ist, aufgebaut. Dies Material gibt der Schale die notwendige Härte und geht bei Temperaturen oberhalb der Raumtemperatur in einen thermoplastischen Zustand über. Diese Temperaturen befinden sich unterhalb der üblichen Vulkanisiertemperaturen bis 200°. Polycarbonat oder Polyetherketon ist durch geeignete Standardverfahren, beispielsweise Formpressen oder Spritzgießen, besonders einfach weiterverarbeitbar.

Eine weitere bevorzugte Ausführungsform stellt der Kern gemäß den Merkmalen von Anspruch 6 dar. Durch Füllen der elastischen Schale mit festen, kleinen Füllkörpern entsprechend der gewünschten Außenkontur, die der Innenkontur des Reifens entspricht, wird ein fester Kern erzeugt. Die dicht an dicht liegenden Füllkörper geben der sie umgebenden elastischen Schale hinreichend Festigkeit zum Aufbau des Reifens. In der Vulkanisiereinrichtung wird der Innendruck erhöht, so daß die elastische Schale expandiert und somit für die notwendige Erhebung des Reifens zur zuverlässigen Profilerzeugung sorgt. Durch Anlegen eines Vakuums nach Füllen der elastischen Schale wird der Kern besonders formstabil verfestigt.

Durch Öffnungen zum gesteuerten Zuführen bzw. Entnehmen der Füllkörper mit Hilfe der Mittel zum Zuführen bzw. Entnehmen der Füllkörper können die Füllkörper zuverlässig vor Reifenaufbau zur Erzeugung der gewünschten Kontur zugeführt und im Anschluß an den Vulkanisationsprozeß oder nach Einlegen in die Vulkanisiermulde vor dem Vulkanisationsprozeß wieder entnommen werden. Hierdurch kann die elastische Schale nach Entnahme der Füllkörper auf ein minimales Volumen zusammengedrückt werden, wodurch das Entfernen des Kerns vom vulkanisierten Reifen besonders einfach wird. Mit Hilfe eines Sauganschlusses und mittels gesteuerter Mittel zum Saugen ist die Entleerung und somit die Entfernung nach der Vulkanisation besonders schnell und auch automatisiert durchführbar.

Vorteilhafterweise sind die Füllkörper kugel- oder rundkornförmig mit Durchmessern von D = 0,05 bis 5 mm ausgebildet.

Besonders einfach erfolgt die Einstellung des Innendrucks mit Hilfe von gesteuerten Mitteln zum Einstellen des Innendrucks.

Hierdurch ist ein zuverlässiges Einstellen des Innendrucks, der gewünschten Erhebung und der Genauigkeit des Endprodukts einfach erzielbar. Bevorzugt wird der Innendruck durch Veränderung des Gasvolumens vom Vakuumzustand auf Innendruck erzeugt. Hierbei sind herkömmliche Einrichtungen zum Füllen bzw. Entleeren von Heizbälgen in Vulkanisiereinrichtungen einsetzbar.

Die Erfindung wird im folgenden anhand der in den Figuren 1 bis 10 dargestellten Ausführungsbeispiele näher erläutert:

Hierin zeigen:
- Figur 1: Schema zur Karkassenwicklung
- Figur 2: Formpressen zur Herstellung der Halbschale
- Figur 3: Aufbau des Kerns durch Zusammensetzen der Halbschalen
- Figur 4: Auf Zentrierring montierten Aufbaukern
- Figur 4a: Fixierung des Aufbaukerns auf Zentrierring
- Figur 4b: Fixierung des Aufbaukerns auf Zentrierring
- Figur 5: Aufgebauter Reifen in nicht geschlossener Vulkanisierpresse
- Figur 6: Aufgebauter Reifen bei geschlossener Vulkanisierpresse
- Figur 7: Aufbau und Befüllen eines Kerns mit elastischer Außenhaut
- Figur 8: Evakuieren des Kerns von Figur 7
- Figur 9: Aufgebauter Reifen auf Kern von Figur 8 in nichtgeschlossener Vulkanisierpresse
- Figur 10: Aufgebauter Reifen von Figur 9 in geschlossener Vulkanisierpresse

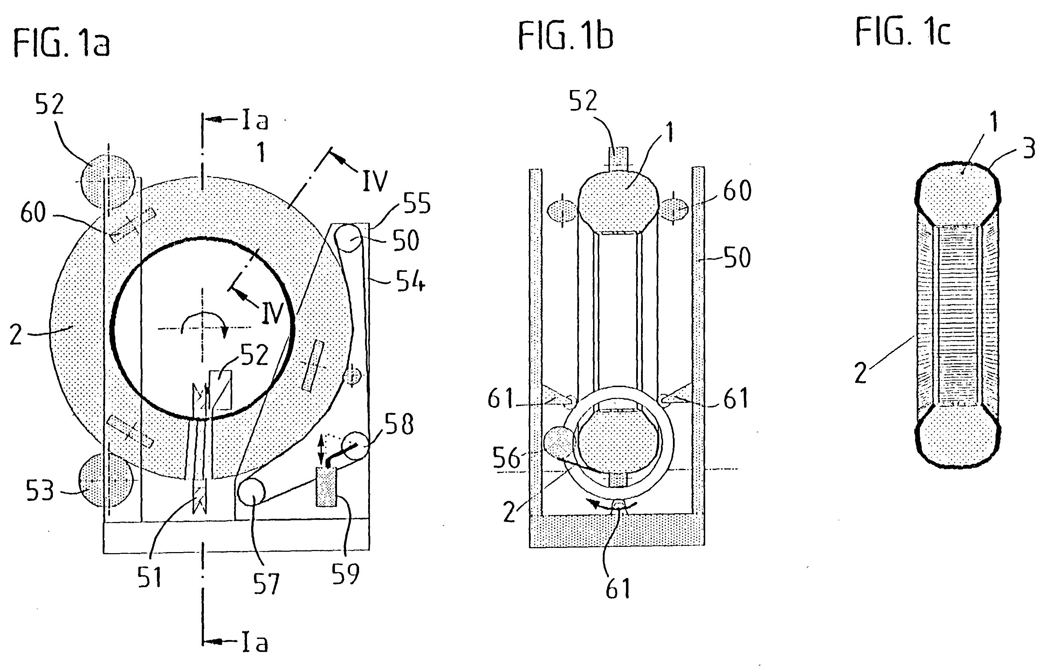

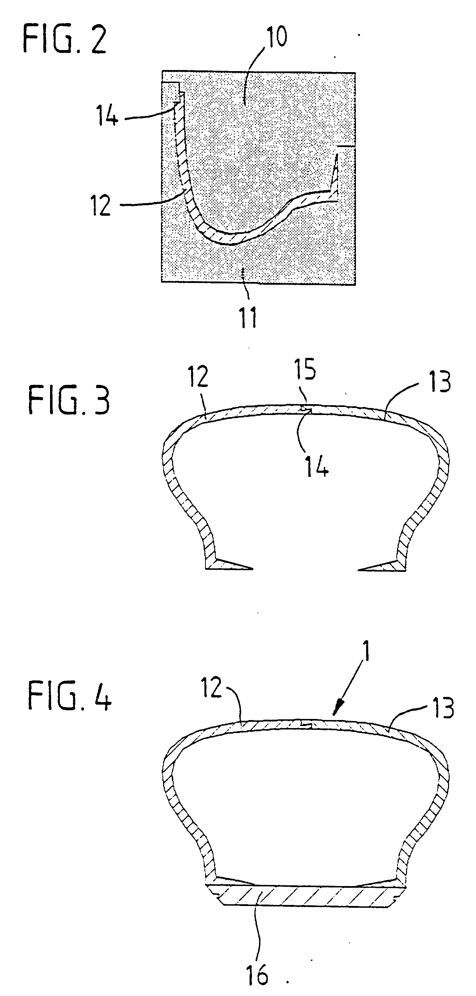

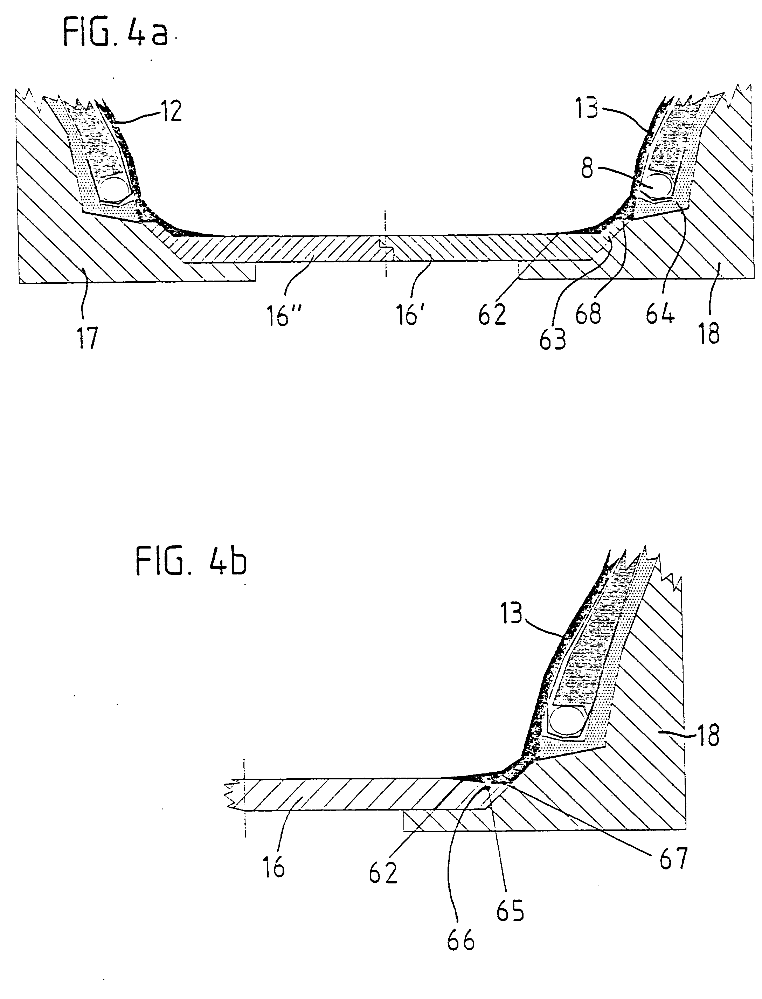

Die Figuren 1 bis 3 zeigen die Umwicklung eines ringförmigen Aufbaukerns, dessen Außenkontur der Innenkontur eines Reifens entspricht, in bekannter Weise mit Karkassenfäden 2 . Ein derartiger Wickelkern 1 ist in einer schematischen Querschnittsdarstellung gemäß Schnitt IV-IV von Figur 1 in Figur 4 dargestellt. Der Wickelkern 1 besteht aus zwei konzentrisch zum Wickelkern ausgebildeten, ringförmigen Halbschalen 12 und 13 mit zusammenwirkenden ringförmigen Klemmverschlußansätzen 14 und 15. Die Halbschalen werden, wie in Figur 2 dargestellt ist, in bekannter Weise zwischen einem Preßformoberteil 10 und einem Preßformunterteil 11 gepreßt und im Anschluß daran dichtend auf einem Zentrierring 16, wie in Figur 4 dargestellt ist, lösbar befestigt. Im radial äußeren Umfangsbereich werden die Halbschalenelemente mit ihren ringförmigen korrespondierenden Verschlußelementen 14 bzw 15 unter Formschluß dichtend aneinander befestigt. Die äußere Kontur der durch die beiden Halbschalen 12 und 13 gebildeten Schalen des Kerns 1 entspricht der Innenkontur des zu fertigenden Reifens.

Es ist auch denkbar, die Halbschalen durch Spritzgießen herzustellen.

Die Halbschalen werden aus einem thermoplastischen Material gefertigt, dessen Grenztemperatur für den Umschlag ins Plastische im Bereich zwischen Betriebstemperatur für den Aufbau des Reifens und Vulkanisiertemperatur liegt. Die Halbschalen werden aus einem thermoplastischem, polymerem Werkstoff, dessen Glasübergangstemperatur oberhalb RT (Raumtemperatur) liegt und der bis 200°C thermisch stabil ist und sich durch Formpressen oder Spritzgießen oder ein anderes geeignetes Standardverfahren verarbeiten läßt, hergestellt. Bespielsweise ist es denkbar, die Halbschalen aus Polycarbonat oder Polyetherketon zu fertigen. Der Zentrierring ist aus Metall gefertigt und weist an seiner radialen Innenseite eine über den Umfang reichende Zentrierfläche auf.

Nach Fertigstellung des Wickelkerns wird in bekannter Weise zunächst eine Innenschicht aufgelegt, bevor der Wickelkern in bekannter, in den Figuren la bis lc dargestellten Weise mit einem umlaufenden Karkaßfaden 2 bewickelt werden. Hierfür wird der Kern zwischen den Lagerscheiben 52 und 53 und einem Lagerband 54, das über Umlenkrollen 55, 57 und eine Antriebsrolle 58 umlaufend geführt wird, in einer Dreipunktlagerung gelagert. Ein Wickelring 51 wird anschließend rund um den Querschnitt des Kerns von Figur 4, wie in Figur 1 a und b dargestellt ist, aufgebaut. Der Wickelring 51 ist dabei zwischen Lagerscheiben 61 drehbar um den Querschnitt des Kerns 1 bewegbar gelagert. Am Wickelring 51 ist in bekannter Weise eine Spule 56 mit einem Karkaßfaden 2 befestigt. Der Wickelring 51 wird in bekannter Weise mit konstanter Drehrichtung um den Querschnitt des Kerns gedreht. Dabei wird mit Hilfe der vom Antriebsmotor 59 angetriebenen Antriebsrolle der Kern 1 über das Lagerband 54 langsam in genau zur Drehgeschwindigkeit des Wickelrings 51 abgestimmter Geschwindigkeit um seine Achse gedreht. Durch die Drehbewegung des Wickelrings 51 sowie des Kerns 1 wird mit genau vorher abgestimmter Schrittweite der Karkaßfaden 2 spiralenförmig um den Aufbaukern gewickelt, wie in Figur lc dargestellt ist. Auf diese Weise können mehrere Karkaßschichten übereinander gewickelt werden. Durch Verändern der Drehrichtung von Kern 1 oder von Wickelring 51 sind dabei kreuzförmige Anordnungen der Karkaßfäden verschiedener Lagen zueinander möglich. In bekannter Weise wird nach Aufbau der Karkasse beiderseits des Kerns 1 außerhalb der Karkasse ein Reifenkern 8 mit Kernprofil 9 konzentrisch aufgelegt. Die Karkasse 2 wird in bekannter Weise in der Mitte ihrer axialen Erstreckung im radial unteren Bereich über den Umfang hinweg aufgeschnitten und mit ihren Enden um Reifenkern 8 und Reifenkernprofil 9 radial nach außen umgeklappt. Ebenso ist es denkbar, den Reifenkern 8 vor Umwickeln der Karkasse aufzulegen und nach Auftrennen der Karkasse die Karkasse um den Kern nach innen zu klappen.

Der Reifen wird in bekannter Weise mit Gürtel 6, Seitenstreifen 5 und Laufstreifen 7 belegt und im auf dem Kern 1 aufgebauten Zustand mitsamt dem Zentrierring bis zur Vulkanisation zwischengelagert. Der Zentrierring kann dabei in nicht dargestellter Weise zur Sicherung des Reifens durch Befestigung im Lagerbereich bei der Zwischenlagerung zum Schutz des Reifens verwendet werden.

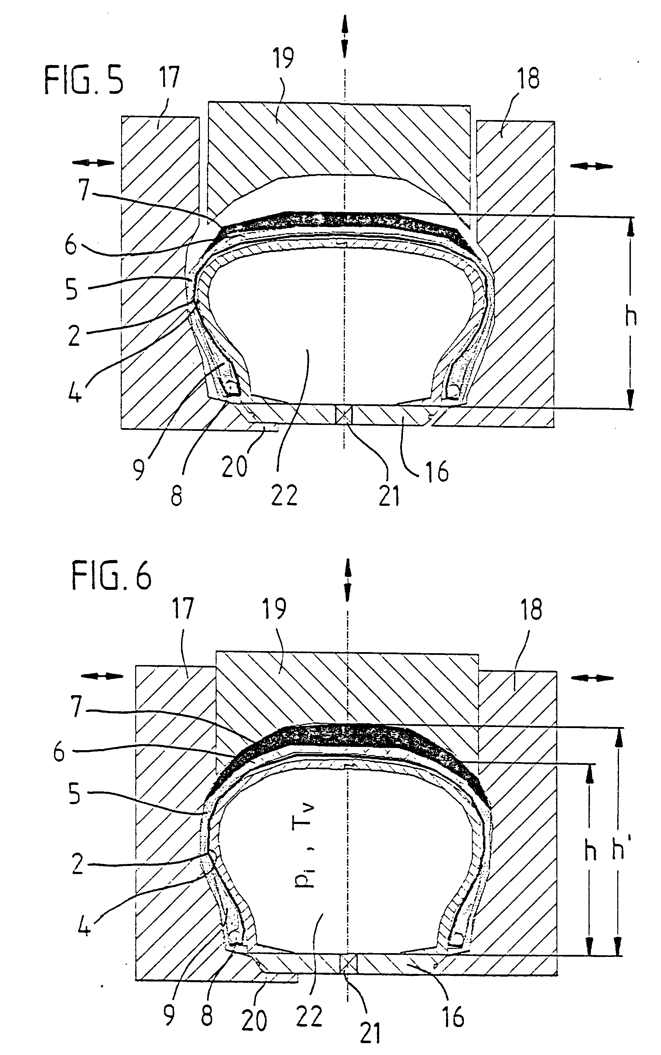

Im Anschluß daran wird der bis dahin nicht vom Kern und vom Zentrierring entfernte Reifen, wie in Figur 5 dargestellt ist, in eine Vulkanisationspresse bekannter Bauart, bestehend aus herkömmlichen beweglichen Vulkanisierformseitenteilen 17 und 18 und radial beweglichen, über den Umfang zwischen den Seitenteilen verteilt angeordneten Profilsegmenten 19 der Formmulde zentripedaler Bauart eingelegt. Die Profilsegmente 19 bilden dabei im geschlossenen Zustand gemäß Figur 6 einen geschlossenen Umfangsring. Im offenen Zustand der Vulkanisierpresse gemäß Figur 5 wird der Zentrierring 16 auf eine ringförmige Zentrierkante 20 des einen Vulkanisierformseitenteils 17 aufgesetzt. Der Außendurchmesser der Zentrierkante 20 ist dabei genau auf den Innendurchmesser des Zentrierrings 16 abgestimmt. Beim Schließen der Presse rücken die Seitenteile 18 und 17 axial zueinander nach innen, die Profilsegmente 19 werden radial nach innen zur Herstellung des gewünschten Formkreises für den Außendurchmesser des Reifens verschoben. Die Formteile 17, 18, die Profilsegmente 19 und der Zentrierring 16 bilden eine geschlossene Form. Durch ein Ventil 21 im Zentrierring 16 wird in bekannter Weise wie bei herkömmlichen Heizbalgen von Vulkanisierpressen Heißdampf mit genau vorbestimmtem Druck in den Innenraum 22 des Reifenkerns eingebracht. Sobald die Schale des Kerns 1 eine Temperatur erreicht, die der Temperatur zum Übergang in den plastischen Zustand entspricht, wird die Schale plastisch. Die Schale dehnt sich aufgrund des Innendrucks im Innenraum 22 aus und erhebt dabei den aufgebauten Reifen nach außen in die Formen 17, 18, 19. Der Bereich der Lauffläche des Reifens wird dabei aus einer Höhe h vom unteren Zentrierringrand von Figur 5 in eine Höhe h' angehoben. Auf diese Weise wird die Lauffläche sicher in die Profilkonturen der Profilsegmente 19 eingepreßt. Aufgrund der danach erreichten Vulkanisiertemperaturen der Profilsegmente 19 der Profilseitenwände 17, 18 sowie der Schale wird der Reifen in herkömmlicher Weise vulkanisiert. Nach erfolgter Vulkanisation wird der Heißdampf entweder durch das Ventil 21 oder durch ein oder mehrere zusätzliche Ventile durch den Zentrierring 16 abgezogen. Hierzu können zusätzliche Saugeinrichtungen verwendet werden. Nach Öffnen der Vulkanisierpresse wird der Reifen mit dem Zentrierring entfernt, der Zentrierring von den Halbschalen 12 und 13 gelöst und die Halbschalen 12 und 13 herausgezogen.

Es ist denkbar, den Zentrierring 16 aus zwei koaxialen Hälften 16', 16" auszubilden, die zum Kernaufbau wie in Figur 4a dargestellt ist, axial nebeneinander angeordnet und dichtend aneinander befestigt werden.

Zum Entfernen des Zentrierringes 16 vom fertigen Reifen werden die Hälften 16', 16" gelöst und seitlich aus dem Reifen herausgezogen.

Die Zentrierringhälften von Figur 4a sind beispielhaft mit einer axial begrenzenden Umfangskante 63 ausgebildet, an der je eine Lippe 62 der elastischen Schale 13 bzw. der Schale 12 axial dicht anliegt. Die Umfangskante 63 ist mit ihrem Außendurchmesser so ausgebildet, daß sie unterhalb des Wulstgummis 64 herausgeführt werden kann.

Ebenso ist es denkbar, wie in Figur 4b dargestellt ist, einen einstückigen Zentrierring an seinen axialen äußeren Außenkonturbereichen mit Umfangsnut 66 und hierzu korrespondierend die elastischen Schalen 12, 13 im Bereich der Dichtlippe 62 mit einer Umfangsnase auszubilden. Axial innerhalb der Umfangsnuten 66 kann der Zentrierring 16 zur Verstärkung der Dichtwirkung mit seiner radialen Außenkontur ansteigend ausgebildet werden. Zur Montage werden die Schalen 12, 13 axial von außen nach innen auf den Zentrierring geschoben, bis die Umfangsnase 65 in der Umfangsnut 66 einklickt. Die Demontage erfolgt umgekehrt durch Herausziehen des Zentrierrings.

Sowohl bei der Ausführung von Figur 4a als auch bei der von Figur 4b sind Zentrierflächen 16 ausgebildet zur Zentrierung der Schalen 12, 13.

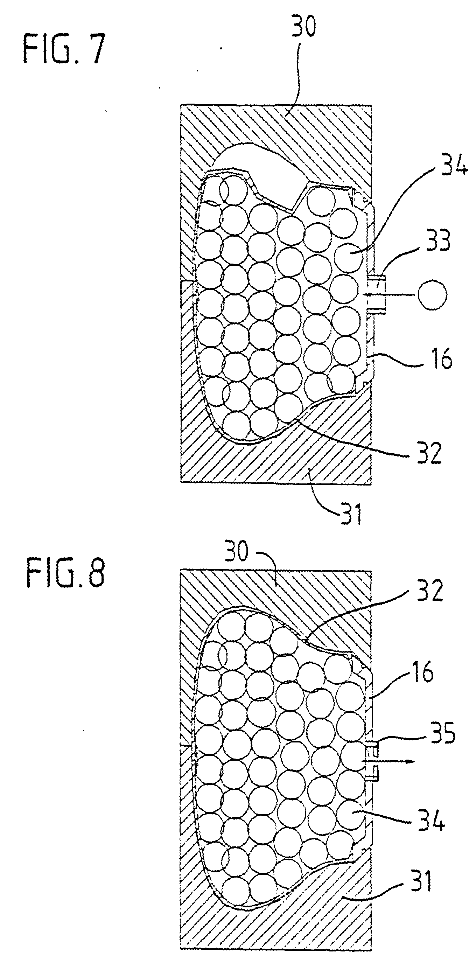

Wie in Figur 7 und 8 dargestellt ist, ist es auch denkbar, den Kern auf einer elastischen Haut 35, zum Beispiel aus Gummi, aufzubauen, der an den axialen Begrenzungen des Zentrierrings 16 dicht befestigt ist. Der Zentrierring 16 wird in einer Kernaufbauform, bestehend aus den Kernaufbauschalenhälften 31 und 30, zentriert angelegt. Die Kernaufbauschalenhälften 30 und 31 bilden in ihrem geschlossenen Zustand mit ihren Innenkonturen die gewünschte Außenkontur für den Kern 1 und somit für die Innenkontur des gewünschten Reifens. Durch über den Umfang des Zentrierringes im Zentrierring verteilt vorgesehene Füllöffnungen 33 werden geeignete Füllkörper, zum Beispiel feste Kugeln aus Glas, mit einem maximalen Durchmesser von 8 mm und mit einem durchschnittlichen Durchmesser von 0,5 bis 5 mm, zur Erzeugung einer besonders gleichmäßigen, glatten Mantelfläche, bevorzugt bis 2 mm, eingefüllt. Durch zusätzliche Evakuierungsöffnungen 35, deren Öffnungsdurchmesser kleiner als der Durchmesser der Glaskugeln ist, kann die Luft im Kern entweichen. Bei Bedarf kann sie zusätzlich mit geeigneten bekannten Saugeinrichtungen abgesaugt werden. Die in den Figuren stark vergrößert dargestellten Kugeln 34 füllen den gesamten Innenraum 22 der gedehnten Hülle 32, so daß ein fester Kern aus den Glaskugeln 34 und der die Glaskugeln 34 in der der Innenkontur der Formen 30, 31 entsprechenden Form haltenden elastisch gedehnten Hülle 32 entsteht.

Nach Verschließen der Füllöffnungen 33 werden die Formen 30 und 31 entfernt, und der Reifen in der bereits zur Ausführung von Figur 4 beschriebenen Weise gemäß der Darstellung von Figur 1 durch Auflegen einer Innenschicht und durch Rundumwickeln der Karkassenschichten, durch Aufbringen der Reifenkerne, Aufschneiden der Karkasse im radial inneren Bereich, Umklappen um die Kerne sowie durch Aufbringen der Seitenteile des Gürtels und der Lauffläche aufgebaut.

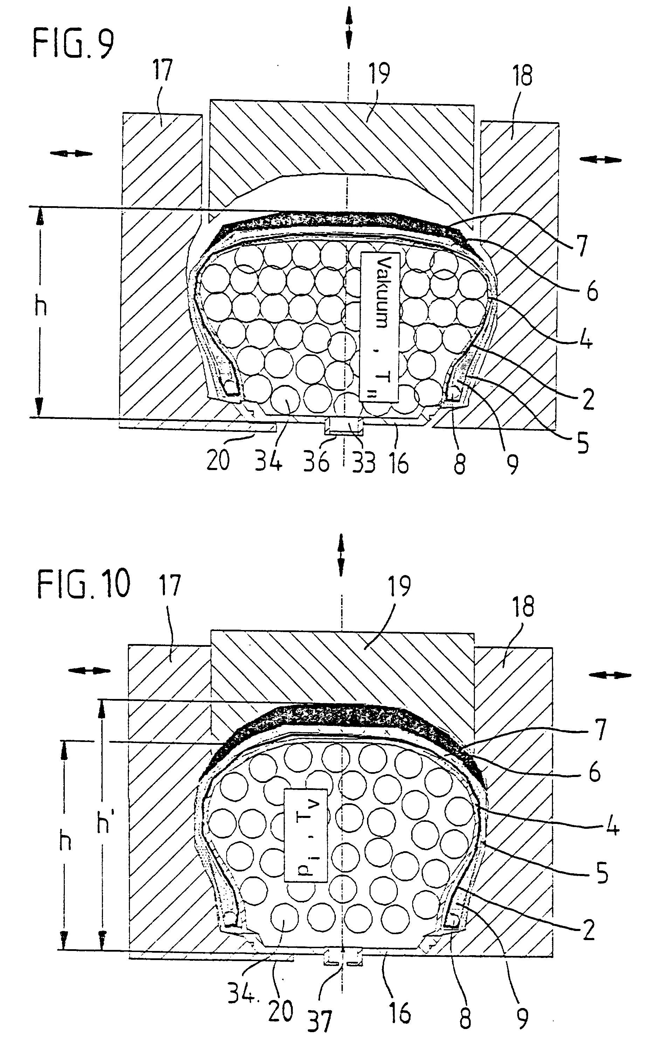

Nach entsprechender Zwischenlagerung wird der Reifen, wie in Figur 9 dargestellt ist, in eine Vulkanisierpresse bekannter Bauart zentriert eingelegt. Nach Schließen der Formen wird durch Ventilöffnungen 37 im Zentrierring zusätzlich heißer Dampf mit vorgegebenem Druck und Temperatur in den Innenraum 22 des Kerns eingeblasen. Aufgrund des hierdurch entstehenden Überdrucks wird die elastische Hülle 32 weiter nach außen gedehnt und drückt den aufgebauten Reifen in die Formteile 17, 18, 19. Hierdurch wird das vorgegebene Profil der Formteile 19 zuverlässig in die Lauffläche übertragen. Bei erreichter Innen- und Außentemperatur für die Vulkanisation wird der Reifen in bekannter Weise vulkanisiert.

Nach erfolgter Vulkanisation wird zunächst der Heißdampf durch Ventilöffnung 37 aus dem Innenraum entfernt. Nach Öffnen des Verschlusses 36 der Füllöffnungen 33 werden die Kugeln mit Hilfe von Absaugpumpen aus dem Innenraum gesaugt. Die elastische Hülle fällt in sich zusammen. Der zentrierring kann mitsamt der elastischen Hülle einfach aus dem Reifen axial herausgezogen werden.

### Bezugszeichenliste

- 1: Wickelkern
- 2: Karkasse
- 3: Karkaßfäden
- 4: Innenschicht
- 5: Seitenstreifen
- 6: Gürtel
- 7: Laufstreifen
- 8: Reifenkern
- 9: Reifenkernprofil
- 10: Preßformoberteil
- 11: Preßformunterteil
- 12: Halbschale
- 13: Halbschale
- 14: Verschlußansatz
- 15: Verschlußansatz
- 16: Zentrierring
- 17: Vulkanisierformseitenteil
- 18: "
- 19: Zentripetalbewegliches Profilsegment der Vulkanisierform
- 20: Zentrieransatz
- 21: Ventil
- 22: Innenraum
- 30: Kernaufbauformhalbschale
- 31: "
- 32: elastische Haut
- 33: Füllöffnung
- 34: Kugel
- 35: Evakuieröffnung
- 36: Verschluß
- 37: Ventilöffnung
- 50: Gestell
- 51: Wickelring
- 52: Lagerscheibe
- 53: "
- 54: Lagerband
- 55: Umlenkrolle
- 56: Spule
- 57: Umlenkrolle
- 56: Spule
- 57: Umlenkrolle
- 58: Antriebsrolle
- 59: Schrittmotor
- 60: Seitenführung
- 61: Lagerrolle
- 62: Dichtlippe
- 63: Umlaufkante
- 64: Wulstgummi
- 65: Zentriernase
- 66: Zentrierrille
- 67: Zentrierfläche

## Patentansprüche

1. Kern mit ringförmigem Torus sowohl zum Aufbau eines Fahrzeugluftreifens durch Rundumwickeln der Karkasse um den Kern als auch zum Vulkanisieren des Fahrzeugluftreifens,
- wobei der ringförmige Torus als Balg zum Heizen bei der Vulkanisation ausgebildet ist und auf einem Zentrierelement zur Zentrierung sowohl beim Aufbau als auch während des Heizprozesses angeordnet ist.

2. Kern gemäß den Merkmalen von Anspruch 1,
- der nach radial außen und zu den Seitenflächen hin mit einer geschlossenen und nach radial innen hin offenen sich über den Umfang erstreckenden Schale ausgebildet ist,
- dessen Plastifiziertemperatur oberhalb der Betriebstemperatur für den Reifenaufbau und unterhalb der Betriebstemperatur für den Vulkanisationsprozeß liegt.

3. Kern gemäß den Merkmalen von Anspruch 1 oder 2,
- dessen Schale aus zwei konzentrischen in Achsrichtung nebeneinander in Umfangsrichtung geschlossenen ringförmigen Halbschalen ausgebildet ist.

4. Kern gemäß den Merkmalen der Ansprüche 2 oder 3,
- dessen Schale aus thermoplastischem, polymerem Werkstoff, dessen Glasübergangstemperatur oberhalb RT (Raumtemperatur) liegt und der bis 200°C thermisch stabil ist, aufgebaut ist.

5. Kern gemäß den Merkmalen von Anspruch 1,
- mit einem Innenraum zur Aufnahme bzw. zur Entnahme von Füllkörpern für die Formgebung des Reifens,
- der nach radial außen und zu den Seitenflächen hin mit einer geschlossenen sich über den Umfang erstreckenden elastischen Schale begrenzt ist,
- mit im Innenraum einstellbarem Innendruck zur Erzeugung einer elastischen Erhebung der Schale während des Heizens,
- mit Mitteln zum Einstellen des Innendrucks.

6. Kern gemäß den Merkmalen von Anspruch 1,
- mit einem Innenraum zur Aufnahme bzw. zur Entnahme von Füllkörpern für die Formgebung des Reifens,
- der nach radial außen und zu den Seitenflächen hin mit einer geschlossenen sich über den Umfang erstreckenden elastischen Schale begrenzt ist,
- mit im Innenraum einstellbarem Innendruck zur Erzeugung eines Unterdrucks zur Verfestigung des Kerns und zur Erzeugung einer elastischen Erhebung der Schale während des Heizens,
- mit Mitteln zum Einstellen des Innendrucks.

7. Kern gemäß den Merkmalen von Anspruch 5 oder 6,
- mit einer oder mehreren Öffnungen zum Zuführen bzw. zum Entnehmen der Füllkörper in bzw. aus dem Innenraum mit Mitteln zum Zuführen bzw. zum Entnehmen der Füllkörper.

8. Kern gemäß den Merkmalen von Anspruch 7,
- mit einem Ventil zum Anschluß einer Saug- bzw. Blaseinrichtung zum Entlehren bzw. Befüllen des Innenraums mit Füllkörpern.

9. Kern gemäß den Merkmalen von Anspruch 5 oder 6,
- bei dem Füllkörper kugel- oder rundkornförmig ausgebildet sind.

10. Kern gemäß den Merkmalen von Anspruch 5 oder 6
- mit zumindest einem Anschlußelement zum Anschluß einer Saug- bzw. Blaseinrichtung zum gesteuerten Einstellen des Innendrucks.

11. Kern gemäß den Merkmalen von Anspruch 5 oder 6,
- mit Mitteln zum gesteuerten Einstellen des Innendrucks durch Veränderung des Gasvolumens im Innenraum.

## Claims

1. Core, having an annular torus, both for the construction of a pneumatic vehicle tyre by winding the carcase around the core and for the vulcanisation of the pneumatic vehicle tyre,
- wherein the annular torus is configured as a bellows for heating purposes during the vulcanisation process and is disposed on a centering means for centering both during the construction process and during the heating process.

2. Core according to the features of claim 1,
- which is provided, radially outwardly and towards the lateral faces, with a closed shell which is open radially inwardly and extends over the circumference,
- the plasticising temperature of which core lies above the operational temperature for the tyre construction and below the operational temperature for the vulcanisation process.

3. Core according to the features of claim 1 or 2,
- the shell of which is formed from two concentric annular half-shells, which are closed in the circumferential direction when situated adjacent each other in the axial direction.

4. Core according to the features of claims 2 or 3,
- the shell of which is constructed from thermoplastic, polymeric material, the glass transition temperature of which lies above RT (room temperature) and is thermally stable up to 200° C.

5. Core according to the features of claim 1,
- having an interior for the accommodation of fillers, or respectively for the removal of fillers, for the form-shaping of the tyre,
- which is defined, radially outwardly and towards the lateral faces, by a closed resilient shell which extends over the circumference,
- having an internal pressure, which is adjustable in the interior, for producing a resilient raised portion of the shell during the heating process, and
- having means for setting the internal pressure.

6. Core according to the features of claim 1,
- having an interior for the accommodation of fillers, or respectively for the removal of fillers, for the form-shaping of the tyre,
- which is defined, radially outwardly and towards the lateral faces, by a closed resilient shell which extends over the circumference,
- having an internal pressure, which is adjustable in the interior, for generating a reduced pressure for strengthening the core and for producing a resilient raised portion of the shell during the heating process, and
- having means for setting the internal pressure.

7. Core according to the features of claim 5 or 6,
- having one or more apertures for supplying the fillers to the interior, or respectively for removing the fillers from the interior, by means for supplying or respectively for removing the fillers.

8. Core according to the features of claim 7,
- having a valve for the connection of a suction or blowing arrangement for emptying or respectively filling the interior with fillers.

9. Core according to the features of claim 5 or 6,
- wherein fillers have a spherical or globular configuration.

10. Core according to the features of claim 5 or 6,
- having at least one connecting means for the connection of a suction or blowing arrangement for the controlled setting of the internal pressure.

11. Core according to the features of claim 5 or 6,
- having means for the controlled setting of the internal pressure by changing the gas volume in the interior.

## Revendications

1. Noyau à tore annulaire aussi bien pour la confection d'un pneumatique de véhicule par enroulement des fils de carcasse autour du noyau que pour la vulcanisation du pneumatique de véhicule,
- dans lequel le tore annulaire est conçu sous forme de coussin pour chauffer lors de la vulcanisation et est disposé sur un élément de centrage pour le centrage aussi bien lors de la confection que pendant le processus de chauffage.

2. Noyau selon les caractéristiques de la revendication 1,
- qui, radialement vers l'extérieur et jusqu'aux surfaces latérales, est formé d'une coque, s'étendant sur la périphérie, fermée et ouverte radialement vers l'intérieur,
- dont la température de plastification se situe au-dessus de la température de travail pour la confection du pneumatique et en-dessous de la température de travail pour le processus de vulcanisation.

3. Noyau selon les caractéristiques de la revendication 1 ou 2,
- dont la coque est formée de deux demi-coques annulaires, concentriques selon la direction axiale, fermées l'une à côté de l'autre selon la direction périphérique ;

4. Noyau selon les caractéristiques de la revendication 2 ou 3,
- dont la coque est confectionnée en un matériau polymère thermoplastique dont la température de transition vitreuse se situe au-dessus de la température ambiante et qui est thermiquement stable jusqu'à 200° C.

5. Noyau selon les caractéristiques de la revendication 1,
- présentant un espace intérieur pour l'introduction ou l'extraction d'éléments de remplissage pour la mise en forme du pneumatique,
- qui est limité, radialement vers l'extérieur et jusqu'aux surfaces latérales, par une coque élastique fermée, s'étendant sur la périphérie,
- présentant dans l'espace intérieur une pression intérieure réglable pour produire une élévation élastique de la coque pendant le chauffage,
- présentant des moyens pour régler la pression intérieure.

6. Noyau selon les caractéristiques de la revendication 1,
- présentant un espace intérieur pour l'introduction ou l'extraction d'éléments de remplissage pour la mise en forme du pneumatique,
- qui est limité, radialement vers l'extérieur et jusqu'aux surfaces latérales, par une coque élastique fermée, s'étendant sur la périphérie,
- présentant dans l'espace intérieur une pression intérieure réglable pour produire une dépression pour fixer le noyau et produire une élévation élastique de la coque pendant le chauffage,
- présentant des moyens pour régler la pression intérieure.

7. Noyau selon les caractéristiques de la revendication 5 ou 6,
- présentant une ou plusieurs ouvertures pour l'introduction ou l'extraction des éléments de remplissage dans ou hors de l'espace intérieur, avec des moyens pour l'introduction ou l'extraction des éléments de remplissage.

8. Noyau selon les caractéristiques de la revendication 7,
- comportant un robinet de raccordement d'un dispositif d'aspiration ou de soufflage pour extraire les éléments de remplissage hors de l'espace intérieur ou l'en remplir.

9. Noyau selon les caractéristiques de la revendication 5 ou 6,
- dans le cas duquel des éléments de remplissage sont conçus en forme de boule ou de grain rond.

10. Noyau selon les caractéristiques de la revendication 5 ou 6,
- comportant au moins un élément de raccordement pour le raccordement d'un dispositif d'aspiration ou de soufflage pour le réglage commandé de la pression intérieure.

11. Noyau selon les caractéristiques de la revendication 5 ou 6,
- comportant des moyens pour le réglage commandé de la pression intérieure par modification du volume de gaz dans l'espace intérieur.
